# EUROPÄISCHE PATENTSCHRIFT

(11) **EP 1 339 793 B1**
(45) Veröffentlichungstag und Bekanntmachung des Hinweises auf die Patenterteilung: **17.08.2005**
(21) Anmeldenummer: 01969793.7
(22) Anmeldetag: 28.09.2001
(51) Int. Cl.: C08L 59/00

(54) **NUKLEIERTE POLYACETALFORMMASSE MIT ERHÖHTER KRISTALLISATIONSGESCHWINDIGKEIT, IHRE VERWENDUNG UND DARAUS HERGESTELLTE FORMKÖRPER**
NUCLEATED POLYACETAL MOLDING MATERIALS HAVING INCREASED CRYSTALLIZATION SPEED, THEIR USE AND SHAPED MOLDED BODIES PRODUCED THEREFROM
MATIERE A MOULEE POLYACETAL NUCLEEE AYANT UNE VITESSE DE CRISTALLISATION ELEVEE, SON UTILISATION ET CORPS MOULES QU'ELLE PERMET DE REALISER

(30) Priorität: 25.10.2000 DE 10052763
(43) Veröffentlichungstag der Anmeldung: 03.09.2003
(73) Patentinhaber: Ticona GmbH, 65451 Kelsterbach (DE)
(72) Erfinder: ZIERER, Dirk, 65719 Hofheim (DE); ZIEGLER, Ursula, 55130 Mainz (DE); KURZ, Klaus, 65451 Kelsterbach (DE)
(86) Internationale Anmeldenummer: PCT/EP2001/011247
(87) Internationale Veröffentlichungsnummer: WO 2002/034831

(56) Entgegenhaltungen:
- WO-A-99/35191
- DE-A- 2 037 823
- US-A- 5 045 607
- US-A- 5 886 066

## Beschreibung

Die Erfindung betrifft nukleierte Polyacetalformmassen mit erhöhter Kristallisationsgeschwindigkeit, ihre Verwendung zur Herstellung von Formkörpern sowie ein Verfahren zur Erhöhung der Kristallisationsgeschwindigkeit von Polyacetalformmassen

Die Nukleierung von Polyacetal-Formmassen zur Erhöhung der Kristallisationsgeschwindigkeit ist im Prinzip seit langem bekannt. So wird in DE 2037823 die Verwendung von Talkum und Dolomit als Nukleierungsmittel beschrieben. Die Verwendung von verzweigten oder vernetzten Polyacetal-Terpolymeren als Nukleierungsmittel wird in DE 2166377 offenbart. Es ist bekannt, daß die nukleierende Wirkung von Polyacetal-Terpolymer schwächer ist als die nukleierende Wirkung von Talkum. Bei der Verwendung von Talkum alleine ist jedoch die erhöhte Emission von Formaldehyd von Nachteil.
Aufgabe der vorliegenden Erfindung war es daher, nukleierte Polyacetalformmassen mit erhöhter Kristallisationsgeschwindigkeit aufzufinden, wobei gleichzeitig gute mechanische Eigenschaften und eine geringe Emission von Formaldehyd erzielt werden sollen.
Diese Aufgabe wird gelöst durch eine Polyacetal-Formmasse enthaltend
A) Polyoxymethylenhomo- oder Copolymerisat, B) 0,02-0,1 Gew.-% ein Nukleierungsmittel welches von C) verschieden ist, bevorzugt Talkum, und 0,001-5 Gew% eines Polyoxymethylen-Terpolymers
D) weitere Zusatzstoffe.
wobei die Summen der eingesetzten Anteile von A)-D) jeweils 100% ergeben.

Hierbei ist insbesondere der gleichzeitige Einsatz des Nukleierungsmittels B), bevorzugt Talkum, und des Polyacetal-Terpolymeren C) erfindungswesentlich. Es wurde überraschend gefunden, daß beim gemeinsamen Einsatz von Talkum und Polyacetal-Terpolymer ein unerwarteter synergistischer Effekt auftritt. Beim gleichzeitigen Einsatz beider Nukleierungsmittel findet eine Erhöhung der Kristallisationsgeschwindigkeit statt. In einer vorteilhaften Ausführung der Erfindung läßt sich die Menge der verwendeten Nukleierungsmittel weiter reduzieren und damit die Formaldehydemission weiter absenken, wobei der synergistische Effekt, die Erhöhung der Kristallisationsgeschwindigkeit, weiter beobachtet werden kann.

Als Komponente A) eignen sich die eingangs genannten Polyoxymethylen Homo- oder Copolymerisate, die auch als Polyacetale bezeichnet werden. Vorteilhaft enthält die erfindungsgemäße Formmasse 25-99,9 Gew.-% Polyoxymethylen, besonders vorteilhaft 50-99,8 Gew.-%, ganz besonders vorteilhaft 60-99,5 Gew.-%, insbesondere bis 99,25 Gew.-%. Derartige Polymere sind dem Fachmann bekannt und in der Literatur beschrieben, wie zum Beispiel in: Saechtling, Kunststoff-Taschenbuch, Hanser-Verlag, 27. Ausgabe, Seiten 462 bis 465, worauf Bezug genommen wird. Bei den Polyoxymethylenen (POM), wie sie beispielsweise in der DE-A 29 47 490 beschrieben sind, handelt es sich im Allgemeinen um unverzweigte lineare Polymere, die in der Regel mindestens 80 %, vorzugsweise mindestens 90 %, Oxymethyleneinheiten (-CH₂O-) enthalten. Der Begriff Polyoxymethylene bzw. Polyacetale umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen (Halbacetalendgruppen) in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen. Derartige POM-Homo- oder Copolymerisate sind dem Fachmann an sich bekannt und in der Literatur beschrieben. Ganz allgemein weisen diese Polymere mindestens 50 mol-% an wiederkehrenden Einheiten -CH₂O- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden POM-Copolymere als Komponente (A) bevorzugt, insbesondere solche, die neben den wiederkehrenden Einheiten -CH₂O- noch bis zu 50, vorzugsweise von 0,1 bis 20 und insbesondere 0,5 bis 10 mol-% an wiederkehrenden Einheiten 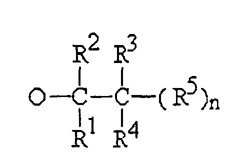 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 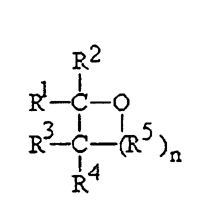 wobei R¹ bis R⁵ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt. Besonders vorteilhaft sind Copolymere aus 99,5 - 90 Mol-% Trioxan und 0,5 bis 10 mol-% einer der vorgenannten Comonomere. Verfahren zur Herstellung der vorstehend beschriebenen POM-Homo- und Copolymerisate sind dem Fachmann bekannt und in der Literatur beschrieben.
Die bevorzugten POM-Copolymere haben Schmelzpunkte von mindestens 150 °C und Molekulargewichte (Gewichtsmittelwert) M_{w} im Bereich von 5 000 bis 200 000, vorzugsweise von 7 000 bis 150 000. Endgruppenstabilisierte POM-Polymerisate, die an den Kettenenden C-C-Bindungen aufweisen, werden besonders bevorzugt.
Die eingesetzten POM-Polymere haben im allgemeinen einen Schmelzindex (MVR-Wert 190/2, 16) von 1 bis 50 cm³/10 min (ISO 1133).
Als Komponente B), Nukleierungsmittel welches von C) verschieden ist, sind prinzipiell alle bekannten Verbindungen geeignet, vorzugsweise Verbindungen die schon in geringen Mengen nukleierende Wirkung zeigen. Komponente B) ist zu 0,02-0,1 Gew.-% in der erfindungsgemäßen Formmasse enthalten .
Geeignet sind zum Beispiel Valentinit, Pyrophyllit, Dolomit, Melamincyanurat , Borverbindungen wie Bornitrid, Kieselsäure, Montmorillonit sowie organisch modifizierter Montmorillonit, organische sowie anorganische Pigmente, Melamin-Formaldehydkondensate und Schichtsilikate, die mit Polyacetal Nanokomposite bilden. Insbesondere wird als Nukleierungsmittel Talkum verwendet. Talkum ist ein hydratisiertes Magnesiumsilikat der Zusammensetzung Mg₃[(OH)₂/Si₄O₁₀] oder 3 MgO x H₂O. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt werden kann.

Die Komponente C), Polyoxymethylen-Terpolymer, ist zu 0,001-5 Gew.-%, vorzugsweise 0,01-3 Gew.-%, insbesondere 0,05-1 Gew.-%, bevorzugt zu 0,1-0,5 Gew.-% in der erfindungsgemäßen Formmasse vorhanden. Als Polyoxymethylen-Terpolymer C), sind geeignet Oxymethylenterpolymerisate, die beispielsweise durch Umsetzung von Trioxan, einem der vorstehend beschriebenen cyclischen Ether und mit einem dritten Monomeren, vorzugsweise einer mindestens bifunktionellen Glycidylverbindung, hergestellt werden.. Beispiele für vorteilhafte bifunktionelle und trifunktionelle Verbindung sind in den Formeln I und II dargestellt. 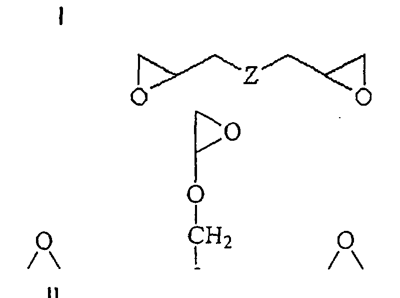 wobei Z eine chemische Bindung, -O- oder -ORO- (R=C₁- bis C₈-Alkylen oder C₂- bis C₈-Cycloalkylen) ist, bzw. R¹ ein Wasserstoffatom, eine C₁- bis C₄-Alkylgruppe oder eine halogensubstituierte Alkylgruppe mit 1 bis 4 C-Atomen ist.
Bevorzugte Monomere dieser Art sind Ethylendiglycid, Diglycidylether und Diether aus Glycidylen und Formaldehyd, Dioxan oder Trioxan im Molverhältnis 2 :1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, Trimethylolpropan-tris-glycidylether, um nur einige Beispiele zu nennen.
Verfahren zur Herstellung der vorstehend Polyoxymethylen-Terpolymere sind dem Fachmann bekannt und in der Literatur beschrieben.

Als Komponente D) können die erfindungsgemäßen Formmassen bis zu 70%, vorteilhaft bis zu 50%, insbesondere bis zu 40% weitere Zusatzstoffe einzeln oder als Gemisch enthalten, wie zum Beispiel Füllstoffe wie Calciumcarbonat, Glaskugeln, Wollastonit, Lehm, die bis zu 50 Gew.-%, vorzugsweise bis zu 40 Gew.-% enthalten sein können, Molybdändisulfid, Ruß, Graphit, Verstärkungsstoffe wie anorganische oder organische Fasern wie Glasfasern, Carbonfasern oder Aramidfasern oder Kaliumtitanat-Whisker, die einzeln oder in Mischung bis zu 50 Gew.-%, vorzugsweise bis zu 40 Gew.-% enthalten sein können, Fließhilfsmittel und/oder Gleitmittel wie Öle, Wachse Polyethylenwachse und/oder oxidierte Polyethylenwachse und/oder Fettsäureester bzw. Fettsäureamide, wie Ethylen-bisstearat und Ethylen-bis-stearylamid, die zu 0,01-10 Gew.-%, vorteilhaft zu 0,05-3 Gew.-%, besonders vorteilhaft zu 0,1 bis 2 Gew.-% verwendet werden können, und thermoplastische oder duroplastische Kunststoffadditive oder Elastomere wie Polyurethan, EPDM (Ethylen-Propylen-Dien-Kautschuk), EPM (Ethylen-Propylen-Kautschuke), Polyesterelastomere, Copolymere des Ethylens mit Estern von (Meth)acrylsäureestern und (Meth)acrylamiden, oder andere Polymere wie Polymethylmethacrylat, Polybutadien, Polyethylen, Polystyrol oder auch Propfcopolymerisate, deren Kern durch Polymerisation von Buta-1,3-dien, Isopren, n-Butylacrylat, Ethylhexylacrylat oder deren Mischungen und deren Hülle durch Polymerisation von Styrol, Acrylnitril oder (Meth)acrylaten hergestellt wurde.

Vorteilhaft als Zusatzstoff einzusetzen sind sterisch gehinderte Phenolverbindungen, insbesondere in einer Menge von bis zu 2 Gew.-%, vorteilhaft in einer Menge von 0,1-1 Gew.-%, besonders vorteilhaft in einer Menge von 0,2-0,4 Gew.-%. Beispiele solcher handelsüblicher Verbindungen sind Pentaerithrityl-tetrakis -[3-(3,5-di-tert.butyl-4-hydroxyphenyl)-propionat] (Irganox 1010, Firma Ciba Geigy), Triethylenglykol-bis-[3-(3-tert.butyl-4-hydroxy-5-methylphenyl)-propionat] (Irganox 245, Firma Ciba Geigy), 3,3'-bis[3-(3,5-di-tert.butyl-4-hydroxyphenyl)-propionohydrazid] (Irganox MD 1024, Fa. Ciba Geigy), Hexamethylenglykol-bis-[3-(3,5-di-tert.butyl-4-hydroxyphenyl)-propionat] (Irganox 259, Firma Ciba Geigy), 3,5-di-tert.butyl-4-hydroxytoluol (Lowinox BHT, Firma Great Lakes). Bevorzugt sind Irganox 1010 und vor allem Irganox 245.

Als Zusatzstoffe weiter vorteilhaft einzusetzen sind UV-Stabilisatoren, die aus der Gruppe der Benzotriazolderivate oder Benzophenonderivate stammen oder aromatische Benzoatderivate enthalten, insbesondere wenn sie in einer Menge von 0,0 - 1,0 Gew.-%, bevorzugt 0,01-0,9 Gew.-%, besonders bevorzugt 0,02-0,8 Gew.-% zugesetzt werden. Bevorzugt ist 2-[2'-Hydroxy-3',5'-bis(1,1-dimethylbenzyl)phenyl]-benzotriazol, das als Tinuvin 234 (Firma Ciba Geigy) im Handel erhältlich ist. Vorteilhafte Zusatzstoffe sind weiter sterisch gehinderte Amine zur Lichtstabilisierung (HALS) in Mengen bis zu 1,0 Gew.-%, vorteilhaft 0,01 bis 0,5 Gew.-%. Bevorzugt sind hierbei 2,2,6,6-tetramethyl-4-piperidyl-Verbindungen, z.B. Bis-(2,2,6,6-tetramethyl-4-piperidyl)-sebazat (Tinuvin 770, Firma Ciba Geigy) oder das Polymer aus Bernsteinsäuredimethylester und 1-(2-Hydroxyethyl)-4-hydroxy-2,2,6,6-tetramethyl-4-piperidin (Tinuvin 622, Firma Ciba Geigy). Die erfindungsgemäßen Formmassen können noch weitere übliche Zusatzstoffe und Verarbeitungshilfsmittel enthalten. Nur beispielhaft seien Zusätze zum Abfangen von Formaldehyd (Formaldehydfänger, oder Formaldehyd-Scavenger), Säurefänger, Weichmacher, Haftvermittler und Pigmente genannt. Der Anteil solcher Zusätze liegt im Allgemeinen bei 0,001 bis 1,0 Gew.-%. Als Formaldehydfänger prinzipiell geeignet sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und davon abgeleitete Verbindungen. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiter Polyamide und Dicyandiamid, Harnstoff und seine Derivate sowie Pyrrolidon und davon abgeleitete Verbindungen. Beispiele für geeignete Pyrrolidone sind zum Beispiel Imidazolidinon und davon abgeleitete Verbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin. Auch oligomere Polyamide sind prinzipiell zum Einsatz als Formaldehydfänger geeignet. Die stickstoffhaltigen Stabilisatoren können einzeln oder in Kombination verwendet werden. Als Säurefänger sind prinzipiell geeignet alle Metallsalze einer Carbonsäure. Alle ein- und zweiwertigen Metallionen sind möglich, Alkali- und Erdalkalimetalle sind jedoch bevorzugt. Die Carbonsäuren besitzen vorteilhaft 3 - 18 C-Atome. Bevorzugt sind Propionate, Citrate und Pyruvate. Besonders bevorzugt sind Calciumcitrat, Magnesiumstearat oder Calciumpropionat. Ebenfalls vorteilhaft als Säurefänger einzusetzen sind Silikate, wie zum Beispiel Ambosol 500 der Firma Clariant, ein synthetisches Magnesiumsilikat.

Die vorstehend aufgezählten Zusatzstoffe D) können einzeln oder in Mischung miteinander eingesetzt werden.

Die Herstellung der erfindungsgemäßen Polyacetalformmasse kann in an sich bekannter Weise durch Mischen der Komponenten erfolgen, vorzugsweise in einem Extruder.

Die erfindungsgemäße Formmasse zeichnet sich durch geringe Emission und gute mechanische Eigenschaften aus, die schnelle Kristallisation ermöglicht eine höhere Produktionsgeschwindigkeit z.B. im Spritzguß.

Die folgenden Beispiele sollen die Erfindung für den Fachmann illustrieren und weitere vorteilhafte Ausführungen offenbaren, ohne jedoch den Schutzumfang einzuschränken.

### Beispiele:

Als Basis Material wurde Polyoxymethylen-Copolymer mit einem MVR von 9 mit 3,4% Dioxolan als Comonomer eingesetzt. Als weitere Zusatzstoffe wurden 0,2 Gew.-% Licowax C als Fließhilfsmittel, 0,30 Gew.-% Irganox 245, 0,10 Gew.-% Calciumcitrat als Säurefänger und 0,05 Gew.-% Eurelon 975 als Formaldehydfänger eingesetzt. Als Polyoxymethylen-Terpolymerisat C) wurde Terpolymer Hostaform T1020 verwendet. Dieses Material ist ein Polymerisat aus Trioxan, 1,3-Dioxolan und 1400 ppm Butandiol-1,4-bis-glycidylether. Als Nukleierungsmittel B) wurde Talk Naintsch A7 der Firma Luzenac verwendet. Die Formaldehydemission wurde nach VDA 275 bestimmt und ist wie folgt beschrieben. Prüfkörperherstellung: Das Polyacetalgranulat wird durch Spritzguß zu Plättchen mit den Dimensionen 80*50*1 mm geformt. Eine Spritzgußmaschiene Kraus Maffei KM 120/340B wird mit folgenden Spritzgußparametern verwendet: Massetemperatur 195 °C, Fließfrontgeschwindigkeit 200 mm/s, Werkzeugwandtemperatur 85 °C, Nachdruck 900 bar, Nachdruckzeit 30 s, Kühlzeit 10 s, Staudruck 0 bis 10 bar. Die Prüfkörper werden vor der Prüfung für 24 h im Norm-Klimaschrank bei 23 °C und 50 % relativer Luftfeuchte gelagert..

Prüfung: Zwei Prüfkörper werden in einer 1 I Glasflasche über 50 ml E-Wasser an einem Edefstahlhacken aufgehängt und für 3 h im Umlufttrockenschrank bei 60 °C gelagert. Die Prüfkörper werden aus der Prüfflasche entfernt. 5 ml Probenlösung werden in ein Reagenzglas pipettiert, das Reagenzglas wird für 10 Minuten bei 95 °C getempert. Nun werden 3 ml Acetylaceton und 3 ml einer 20 %igen Ammoniumacetatlösung in das Reagenzglas hinzugegeben. Der Formaldehyd bildet mit den Reagenzien den Diacetyldihydrolutidin-Komplex, dessen Absorption bei 412 nm photometrisch bestimmt wird. Aus der Absorption wird die Formaldehyd-Konzentration in der Probenlösung berechnet.
Als Maß für die mechanische Eigenschaften wurde der Zug-E-Modul aus Zugversuchen nach DIN ISO 527 bestimmt. Als Maß für die Kristallisationsgeschwindigkeit wurde die Kristallisationshalbwertzeit (KHZ) wie folgt bestimmt: Die Kristallisation von dünnen, bei 200 °C aufgeschmolzenen POM-Filmen (Schichtdicke ca. 10 - 100 µm) wird nach dem raschen Abkühlen auf 152 °C unter dem Polarisationsmikroskop mit einer Photozelle verfolgt. Die Kristallisationshalbwertszeit ergibt sich aus der Zeitspanne zwischen dem optisch erkennbaren Beginn der Kristallisation und dem Erreichen der halben maximalen Lichtintensität).

Die erfindungsgemäßen Beispiele 1 und 2 zeigen eine verringerte Formaldehydemission gegenüber nicht nukleiertem bzw. mit Talk nukleiertem Material und eine reduzierte Kristallisationshalbwertszeit (KHZ) bei vergleichbaren mechanischen Eigenschaften (vergleichbarem Elastizitätsmodul = E-Modul).

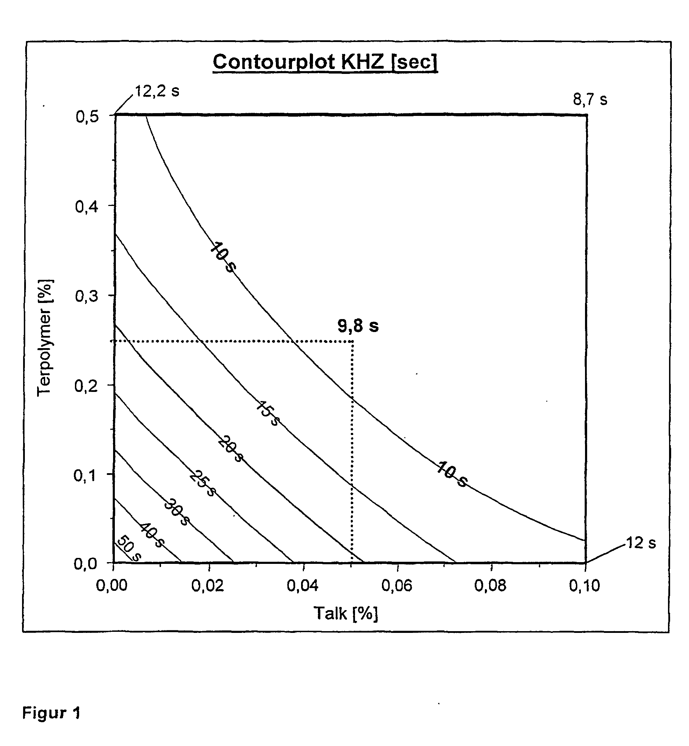

In Figur 1 sind zur Verdeutlichung des synergistischen Effektes die Kristallisationshalbwertzeiten als Konturplot in Abhängigkeit vom Gehalt an Talkum und Terpolymer aufgetragen.

**Tabelle 1:**

| Rezepturen der Beispiele und Vergleichsbeispiele | | | | |
|---|---|---|---|---|
| | POM / Gew.-% | Weitere Zusatzstoffe / Gew.-% | Terpolymer / Gew.-% | Talk / Gew.-% |
| Vergleichsbeispiel 1 | 99,35 | 0,65 | 0 | 0 |
| Vergleichsbeispiel 2 | 98,85 | 0,65 | 0,50 | 0 |
| Beispiel 1 | 99,05 | 0,65 | 0,25 | 0,05 |
| Beispiel 2 | 98,75 | 0,65 | 0,50 | 0,10 |
| Vergleichsbeispiel 3 | 99,25 | 0,65 | 0 | 0,10 |

**Tabelle 2:**

| Versuchsergebnisse | | | | |
|---|---|---|---|---|
| | Nukleierung | VDA 275 / ppm | KHZ (152°C) / sec | E-Modul / MPa |
| Vergleichsbeispiel 1 | Ohne | 69,5 | 56 ± 11 | 3275 ± 160 |
| Vergleichsbeispiel 2 | 0,5% Terpolymer | 38,6 | 12,2 ± 2,5 | 3300 ± 120 |
| Beispiel 1 | 0,25% Terpolymer | 36,9 | 9,8 ± 0,3 | 3070 ± 40 |
| | + 0,05% Talk | | | |
| Beispiel 2 | 0,5% Terpolymer + 0,1% Talk | 57,8 | 8,7 ± 0,3 | 3120 ± 60 |
| Vergleichsbeispiel 3 | 0, 1 % Talk | 60,2 | 12,0 ± 0,5 | 3080 ± 95 |

## Patentansprüche

1. Thermoplastische Formmasse enthaltend
A) Polyoxymethylenhomo- oder Copolymerisat
B) 0,02-0,1 Gew.-% des Nukleierungsmittels Talkum
C) 0,001-5 Gew.-% eines Polyoxymethylen-Terpolymerisates
D) weitere Zusatzstoffe
wobei die Summe der Gewichtsprozente von A) bis D) jeweils 100% ergeben.

2. Thermoplastische Formmasse enthaltend
A) 25 bis 99,9 Gew.-% eines Polyoxymethylenhomo- oder Copolymerisates
B) 0,02-0,1 Gew.-% eines Nukleierungsmittels, welches von C) verschieden ist
C) 0,001-5 Gew.-% eines Polyoxymethylen-Terpolymerisates
D) bis zu 70 Gew.-% weiterer Zusatzstoffe
wobei die Summe der Gewichtsprozente von A) bis D) jeweils 100% ergeben.

3. Thermoplastische Formmasse enthaltend
A) 50 bis 99,8 Gew.-% eines Polyoxymethylenhomo- oder Copolymerisates
B) 0,02-0,1Gew.-% eines Nukleierungsmittels, welches von C) verschieden ist
C) 0,01-3 Gew.-% eines Polyoxymethylen-Terpolymerisates
D) bis zu 50 Gew.-% weiterer Zusatzstoffe
wobei die Summe der Gewichtsprozente von A) bis D) jeweils 100% ergeben.

4. Thermoplastische Formmasse enthaltend
A) 60 bis 99,5 Gew.-% eines Polyoxymethylenhomo- oder Copolymerisates
B) 0,02-0,1Gew.-% eines Nukleierungsmittels, weiches von C) verschieden ist
C) 0,05-1 Gew.-% eines Polyoxymethylen-Terpolymerisates
D) bis zu 40 Gew.-% weiterer Zusatzstoffe
wobei die Summe der Gewichtsprozente von A) bis D) jeweils 100% ergeben.

5. Thermoplastische Formmasse enthaltend
A) bis 99,25 Gew.-% eines Polyoxymethylenhomo- oder Copolymerisates
B) 0,02 bis 0,1 Gew.-% eines Nukleierungsmittels, weiches von C) verschieden ist
C) 0,1-0,5 Gew.-% eines Polyoxymethylen-Terpolymerisates
D) weiterer Zusatzstoffe, enthaltend 0,2 Gew.-% Fließmittel und/oder Gleitmittel, 0,3 Gew.-% einer sterisch gehinderten Phenolverbindung, 0,10 Gew.-% Säurefänger, 0,05 Gew.-% Formaldehydfänger,
wobei die Summe der Gewichtsprozente von A) bis D) jeweils 100% ergeben

6. Thermoplastische Formmasse nach einem oder mehreren der Ansprüche 1 bis 5, enthaltend als Zusatzstoff D) bis zu 2 Gew.-% einer sterisch gehinderten Phenolverbindung und/oder bis 1,0 Gew.-% eines Stabilisators aus der Klasse der Benzotriazolderivate oder Benzophenonderivate und/oder 0,5 Gew.-% eines sterisch gehinderten Amins (HALS) zur Lichtstabilisierung.

7. Verfahren zur Verkürzung der Kristallisationszeit einer Polyoxymethylen-Formmasse, wobei als Nukleierungsmittel 0,02-0,1 Gew.-% Talkum und 0,001-5 Gew.-% Polyoxymethylen-Terpolymerisat in Kombination eingesetzt wird.

8. Verwendung einer thermoplastischen Formmasse nach einem oder mehreren der Ansprüche 1 bis 6 zur Herstellung von Fasern. Folien und Formkörpern,

9. Formkörper erhältlich aus den thermoplastischen Formmassen gemäß einem der Ansprüche 1 bis 6.

## Claims

1. Thermoplastic moulding composition comprising
A) polyoxymethylene homo- or copolymer,
B) 0.02-0.1 % by weight of the nucleating agent talc,
C) 0.001-5% by weight of a polyoxymethylene terpolymer, and
D) other additives,
where the total of the percentages by weight of A) to D) is always 100%.

2. Thermoplastic moulding composition comprising
A) from 25 to 99.9% by weight of a polyoxymethylene homo- or copolymer
B) 0.02-0.1% by weight of a nucleating agent other than C),
C) 0.001-5% by weight of a polyoxymethylene terpolymer, and
D) up to 70% by weight of other additives,
where the total of the percentages by weight of A) to D) is always 100%.

3. Thermoplastic moulding composition comprising
A) from 50 to 99.8% by weight of a polyoxymethylene homo- or copolymer
B) 0.02-0.1% by weight of a nucleating agent other than C),
C) 0.01-3% by weight of a polyoxymethylene terpolymer, and
D) up to 50% by weight of other additives,
where the total of the percentages by weight of A) to D) is always 100%.

4. Thermoplastic moulding composition comprising
A) from 60 to 99.5% by weight of a polyoxymethylene homo- or copolymer
B) 0.02-0.1% by weight of a nucleating agent other than C),
C) 0.05-1% by weight of a polyoxymethylene terpolymer, and
D) up to 40% by weight of other additives,
where the total of the percentages by weight of A) to D) is always 100%.

5. Thermoplastic moulding composition comprising
A) up to 99.25% by weight of a polyoxymethylene homo- or copolymer
B) from 0.02 to 0.1% by weight of a nucleating agent other than C),
C) 0.1-0.5% by weight of a polyoxymethylene terpolymer, and
D) other additives comprising 0.2% by weight of flow promoter and/or lubricant, 0.3% by weight of a sterically hindered phenol compound, 0.10% by weight of acid scavenger, and 0.05% by weight of formaldehyde scavenger,
where the total of the percentages by weight of A) to D) is always 100%.

6. Thermoplastic moulding composition according to one or more of Claims 1 to 5, comprising, as additive D), up to 2% by weight of a sterically hindered phenol compound and/or up to 1.0% by weight of a stabilizer selected from the group consisting of the benzotriazole derivatives and benzophenone derivatives, and/or up to 0.5% by weight of a sterically hindered amine (HALS) for light-stabilization.

7. Process for shortening the crystallization time of a polyoxymethylene moulding composition, using a combination of 0.02-0.1% by weight of talc and 0.001-5% by weight of polyoxymethylene terpolymer as nucleating agent.

8. Use of a thermoplastic moulding composition according to one or more of Claims 1 to 6, for producing fibres, films or mouldings.

9. Moulding obtainable from the thermoplastic moulding compositions according to any of Claims 1 to 6.

## Revendications

1. Matière à mouler thermoplastique contenant
A) un homo- ou copolymère polyoxyméthylène
B) 0,02-0,1 % en poids de l'agent de nucléation talc
C) 0,001-5 % en poids d'un terpolymère polyoxyméthylène
D) d'autres additifs
la somme des pourcentages en poids de A) à D) donnant chaque fois 100 %.

2. Matière à mouler thermoplastique contenant
A) 25 à 99,9 % en poids d'un homo- ou copolymère polyoxyméthylène
B) 0,02-0,1 % en poids d'un agent de nucléation qui est différent de C)
C) 0,001-5 % en poids d'un terpolymère polyoxyméthylène
D) jusqu'à 70 % en poids d'autres additifs
la somme des pourcentages en poids de A) à D) donnant chaque fois 100 %.

3. Matière à mouler thermoplastique contenant
A) 50 à 99,8 % en poids d'un homo- ou copolymère polyoxyméthylène
B) 0,02-0,1 % en poids d'un agent de nucléation qui est différent de C)
C) 0,01-3 % en poids d'un terpolymère polyoxyméthylène
D) jusqu'à 50 % en poids d'autres additifs
la somme des pourcentages en poids de A) à D) donnant chaque fois 100 %.

4. Matière à mouler thermoplastique contenant
A) 60 à 99,5% en poids d'un homo- ou copolymère polyoxyméthylène
B) 0,02-0,1 % en poids d'un agent de nucléation qui est différent de C)
C) 0,05-1 % en poids d'un terpolymère polyoxyméthylène
D) jusqu'à 40 % en poids d'autres additifs
la somme des pourcentages en poids de A) à D) donnant chaque fois 100 %.

5. Matière à mouler thermoplastique contenant
A) jusqu'à 99,25 % en poids d'un homo- ou copolymère polyoxyméthylène
B) 0, 02 à 0,1 % en poids d'un agent de nucléation qui est différent de C)
C) 0,1-0,5 % en poids d'un terpolymère polyoxyméthylène
D) d'autres additifs contenant 0,2 % en poids de fluidifiant et/ou de lubrifiant, 0,3 % en poids d'un composé phénolique à empêchement stérique, 0,10 % en poids d'un agent capteur d'acide, 0,05 % en poids d'un agent capteur de formaldéhyde,
la somme des pourcentages en poids de A) à D) donnant chaque fois 100 %.

6. Matière à mouler thermoplastique selon une ou plusieurs des revendications 1 à 5, contenant en tant qu'additif D) jusqu'à 2 % en poids d'un composé phénolique à empêchement stérique et/ou jusqu'à 1,0 % en poids d'un stabilisant choisi dans la classe des dérivés de benzotriazole ou des dérivés de benzophénone et/ou 0,5 % en poids d'une amine à empêchement stérique (HALS) pour la photostabilisation.

7. Procédé pour la réduction du temps de cristallisation d'une matière à mouler polyoxyméthylène, dans lequel on utilise comme agent de nucléation 0,02-0,1 % en poids de talc et 0,001-5 % en poids de terpolymère polyoxyméthylène en association.

8. Utilisation d'une matière à mouler thermoplastique selon une ou plusieurs des revendications 1 à 6, pour la fabrication de fibres, de films et de corps moulés.

9. Corps moulé pouvant être obtenu à partir des matières à mouler thermoplastiques selon l'une quelconque des revendications 1 à 6.
